# EUROPEAN PATENT SPECIFICATION

(11) **EP 0 439 365 B1**
(45) Date of publication and mention of the grant of the patent: **04.09.1996**
(21) Application number: 91300579.9
(22) Date of filing: 25.01.1991
(51) Int. Cl.: G06T 1/20

(54) **Image signal processing circuit**
Bildsignalverarbeitungsschaltung
Circuit de traitement de signal d'image

(30) Priority: 26.01.1990 JP 16725/90
(43) Date of publication of application: 31.07.1991
(73) Proprietor: SONY CORPORATION, Tokyo (JP)
(72) Inventor: Iwase, Seiichiro, c/o Sony Corporation, Shinagawa-ku, Tokyo (JP)
(74) Representative: Senior, Alan Murray

(56) References cited:
- NEC RESEARCH AND DEVELOPMENT no. 93, April 1989, TOKYO JP pages 63 - 71 M. IWASHITA ET AL. 'A Fine Grained Data Flow Machine and Its Concurrent Execution Mechanism'
- IEEE INTERNATIONAL SOLID STATE CIRCUITS CONFERENCE 1985, NEW YORK US pages 38 - 39 S. ISHIMOTO ET AL. 'A 256K Dual Port Memory'
- PROCEEDINGS OF THE 1988 INTERNATIONAL CONFERENCE ON PARALLEL PROCESSING vol. 1, August 1988, UNIVERSITY PARK, USA pages 452 - 461 M.H. SUNWOO, J.K. AGGARWAL 'Flexibly Coupled Multiprocessors for Image Processing'

## Description

The present invention relates to an image signal processing circuit, and more particularly, to an image signal processing circuit with a multiple port memory.

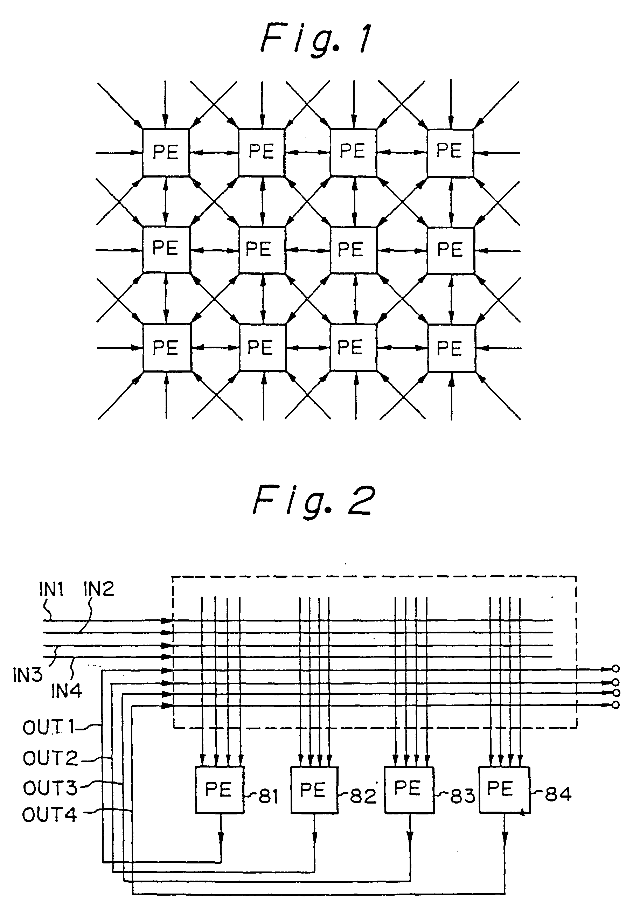

An image processor is basically structured by a large number of processor elements disposed in parallel (hereinafter named PE's, which represent digital computation circuits, for example). As architectures of the image processors, many methods such as systolic array method shown in Fig. 1 and crossbar switch method shown in Fig. 2 have been proposed.

In the case of the systolic array method, a large number of PE's are disposed as shown in Fig. 1. The adjacent PE's are connected so as to make communication thereamong. Such a prior art has been disclosed in the publication of Japanese Patent Laid-Open No. SHO 56-123069.

On the other hand, in the case of the crossbar switch method, as shown in Fig. 2, inputs IN1 to IN4 and outputs OUT1 to OUT4 of PE81 to PE84 are intersected to PE81 to PE84 in a matrix shape. Each intersection is used as a switch. By changing the connections of PE81 to PE84, the internal structure of the image processor is varied.

In the architecture of the image processor in the aforementioned crossbar switch method, to compensate a delay between processors or between processor inputs, a memory should be disposed in each of PE81 to PE84. In addition, in each of PE81 to PE84, a memory for storing a coefficient and a constant is required.

Since each of PE81 to PE84 does not directly access the contents of the memories in other PE's, in a parallel process, the memories of PE81 to PE84 redundantly store the same data.

In addition, since PE81 to PE84 are made in the same structure, when different memory sizes are required for PE81 to PE84, the upper limit size of memories are used. Thus, the memory capacity of PE81 to PE84 becomes redundant. Thus, unused storage areas are always present.

As described above, in the prior art, although the structure of the processor can be varied and the flexibility and generality of specification can be accomplished, the memory areas are wasted and the redundancy of circuit is increased. Although the generality is reciprocal to the redundancy, the desired architecture should satisfy high generality and low redundancy at a time.

The article "Flexibly Coupled Multiprocessors for Image Processing" (Sunwoo and Aggarwal, 1988 PROCS. INT. CONF. ON PARALLEL PROCESSING, Vol 1, pp 452-461) discloses a memory/processor network in which adjacent memory modules connected to respective processors can be selectively combined via a switching network to provide either local memory to each processor or shared memory of variable size effectively with a "dynamic wall" between the memory areas.

Dual port RAM arrangements and their use in image processing applications in unidirectional ring arrangements are disclosed in the articles "A 256K Dual Port Memory" by Ishimoto et al (IEEE INT. SOLID STATE CIRCUITS CONF. 1985 pp 38-39) and "A Fine Grained Data Flow Machine and Its Concurrent Execution Mechanism" by Iwashita et al (NEC R & D, No. 93, April 1989, pp 63-71).

EP-A-0,308,125, which forms the basis for the preamble of claim 1, discloses an image processing computer in which various processors have access to certain set parts of a common memory for either read or write operations.

It is an object of the present invention to provide an image signal processing circuit for accomplishing an architecture with high generality and low redundancy.

According to the present invention there is provided an image signal processing circuit comprising a plurality of processor elements connected to respective parts of a multiple port memory configurable to the processor elements, characterised in that:
all addresses of the memory are accessible for reading and writing to each processor element;
and by setting means for setting the write address and/or read address of the processor elements to given address areas of the multiple port memory ;
and by setting,means for setting the write address and/or read address of the processor elements to given address areas of the multiple port memory.

A register, a delay circuit and/or a buffer memory can be formed among the processor elements in accordance with the setting of the write address and/or read address.

Thus the image signal processing circuit may have a function of a register where the write address of the multiple port memory is the same as the read address thereof.

The image signal processing circuit may have a function of a register or a delay circuit where a first address and a second address are set to the multiple port memory so that the first address is apart from the second address for a given space, wherein the write address and/or the read address in accordance with each of the processor elements is set in an address area defined by the first address and the second address, and wherein the write address and/or the read address are cycled between the first address and the second address while the space between the write address and/or the read address is fixed to a given value.

Further, the space between the write address and/or the read address may be varied and one of the read address and/or the write address does not outrun the other thereof, whereby the circuit can be used as a buffer memory.

Further, the data of the address area defined by the first address and the second address may be repeatedly read, thereby the circuit can be used as a pattern generation circuit.

The above functions may be combined to provide combinations of one or more of a register, buffer or delay between the processors.

The invention also provides a method of processing an image signal comprising supplying image data to a multiple port memory to which a plurality of processor elements are connected and controlling the read and/or write addresses of the processor elements as mentioned in connection with the above aspects of the invention.

The invention will be further described by way of non-limitative example with reference to the accompanying drawings, in which:-
Fig. 1 is a schematic diagram describing an example of the prior art;
Fig. 2 is a schematic diagram describing another example of the prior art;
Fig. 3 is a block diagram showing an embodiment of the present invention;
Fig. 4 is a block diagram showing a serial connection of processor elements;
Fig. 5 is a block diagram showing a parallel connection of processor elements;
Fig. 6 is a block diagram showing another embodiment of the present invention;
Fig. 7 is a block diagram showing the connection of a multiple port memory and processor elements in another embodiment;
Figs. 8 to 10 are schematic diagrams showing a serial connection of processor elements and the structure of address areas;
Figs. 11 to 14 are schematic diagrams showing a parallel connection of processor elements and the structure of address areas; and
Fig. 15 is a block diagram showing an address generator.

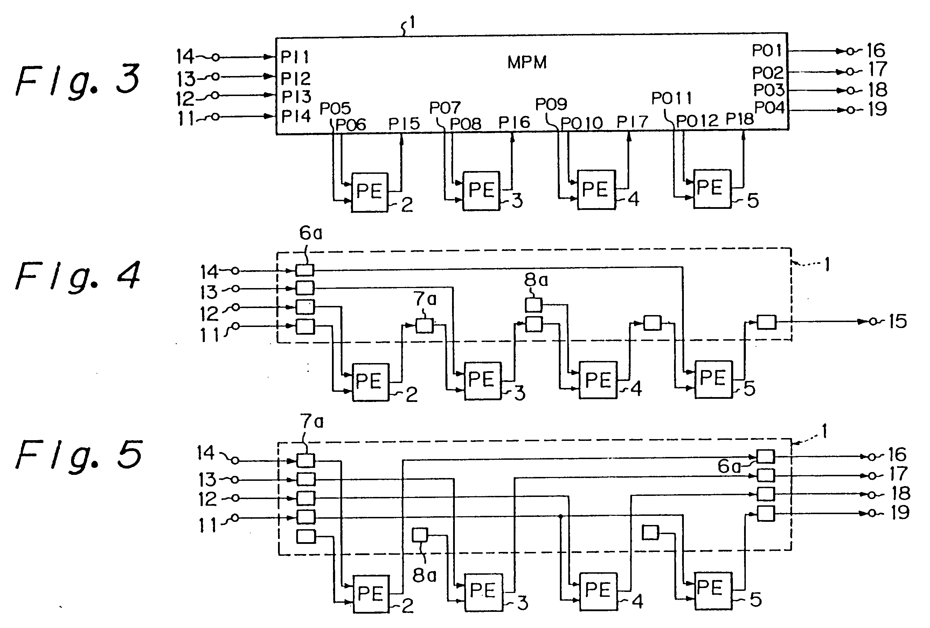

By referring to Fig. 3 to Fig. 15, embodiments of the present invention will be described in the following.

In the structure shown in Fig. 3, a multiple port memory 1 is disposed at a position where a conventional crossbar switch was disposed. A plurality of processor elements (hereinafter named PE's) 2 to 5 are connected to the multiple port memory 1. By designating addresses in the multiple port memory 1, the connection states of the PE 2 to PE5 can be freely defined.

The multiple port memory 1 has 12 output ports PO1 to PO12 and 8 input ports PI1 to PI8. Thus, in total, the multiple port memory 1 has 20 ports. The 20 systems can be independently accessed to the multiple port memory 1. When the total number of the input ports PI and/or the output ports PO is N, the multiple port memory 1 can be accessed to the N systems. These output ports PI1 to PI8 and input ports PO1 to PO12 should be addressed. To do that, an address generation circuit, an address controller, and so forth (which are not shown in fig. 3 are provided.

In the structure shown in fig. 3, by controlling the addresses of the multiple port memory 1, a register, a delay circuit, a buffer memory, a pattern generation circuit, and so forth can be structured in the multiple port memory 1. In the multiple port memory 1, two data write operations to the same address at a time are prohibited. By controlling the address of each port, the following functions (1) to (4) can be accomplished.

### (1) Register:

When both a write address ADW and a read address ADR are fixed to the same address, there is one stage of register between the write address and the read address.

### (2) Register and delay circuit:

In the case where the difference of (ADW - ADR) between the two addresses ADR and ADW is fixed, the register which has (WA - RA + 1) stages can be obtained. The two addresses ADW and ADR are generated in the ascending order and cyclically in the given address area AR which consists of m addresses.

In other words, a delay circuit can be formed and picture element intervals necessary for processing images can be accomplished. For example, a time interval of one horizontal scanning line or a time interval of one frame can be accomplished.

### (3) Buffer memory:

With respect to the aforementioned function (2), in the case where the difference (ADW - ADR) between the addresses ADR and ADW is not fixed and the addresses are not outrun each other, there is a buffer memory with m stages between the write address ADW and the read address ADR (by obtaining the aforementioned difference (ADW - ADR) by using addition with modulo m).

### (4) Pattern generation circuit:

With respect to the aforementioned function (2), in the case where there is only the read address ADR rather than the write address, a particular data string is repeatedly read. Thus, a pattern generation circuit for generating a wave form or constant string can be formed. If m = 1, a fixed value can be generated.

Depending on a combination of the aforementioned address control methods, PE2 to PE5 can be connected as shown in Fig. 4 or Fig. 5.

Fig. 4 shows an example of serial connection of PE2 to PE5.

Blocks 6a, 7a, and 8a represent a register, a delay circuit, and a buffer memory in accordance with the aforementioned functions (1) to (4). For example, in Fig. 4, the block 6a is a buffer memory in accordance with the function (3); the block 7a is a delay circuit in accordance with the function (2); and the block 8a is a constant string generation circuit in accordance with the function (4).

Fig. 5 shows an example of parallel connection of PE2 to PE5.

The blocks 6a, 7a, and 8a shown in Fig. 5 represent a delay circuit, register, and a buffer memory in accordance with the functions (1) to (4) like those shown in Fig. 4. The blocks 6a, 7a, and 8a have the same functions as those shown in Fig. 3.

By a combination of connections shown in Figs. 4 and 5, the connection state of PE2 to PE5 can be freely changed. However, in Figs. 4 and 5, the address of each block which is an address space in the multiple port memory 1 should be designated to a separate area. In other words, when a particular block is addressed in the range from address L1 to address m1, another block should not be addressed in the range of [L1 to (L1 + m1 - 1)].

When the processor is used in a particular system and a required structure is determined, the aforementioned condition should be considered and determined by compiler.

In the aforementioned structure, PE2 to PE5 can be freely connected. In addition, the input and output between PE2 to PE5 or the inputs and outputs of each PE can be freely delayed. The buffer memory 6 can be formed. Fixed data can be also generated. Moreover, since the memory for each PE2 to PE5 can be substituted with the multiple port memory 1, it is not necessary to provide such a memory associated with each PE. Since the multiple port memory 1 can be commonly used for PE2 to PE5, it is possible to prevent data from being redundantly stored. In addition, since the memory size can be varied between PE2 and PE5, the memory size of the multiple port memory 1 can be made up as a small size.

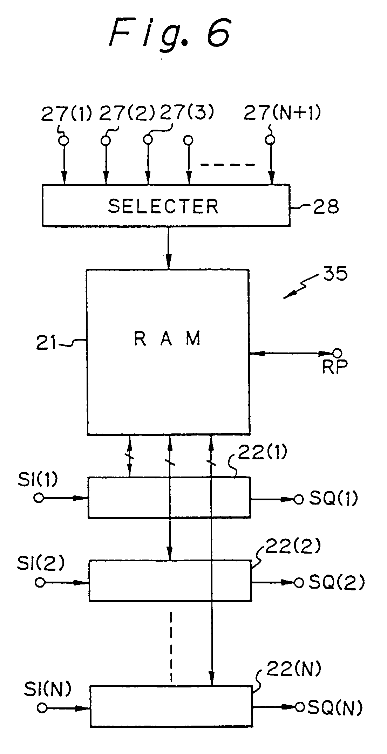

Figs. 6 to 15 show a second embodiment of the present invention. The multiple port memory described in the first embodiment can be accomplished in various methods. When the number of ports is increased, the number of wires is accordingly increased. In addition, the area of the memory chips is increased and thereby decreasing the efficiency.

To improve such problems, the multiple port memory according to the present embodiment is made up by a random access memory (hereinafter named RAM) 21 which has a serial access ports.

In the structure shown in fig. 6, a multiple port memory 35 is structured in the manner that a plurality of serial circuits 22 having a set of serial access port SI(1) to SI(N) and SO(1) to SO(N) are connected in parallel to the RAM 21 having a random access port RP.

To address the multiple port memory 35, (N + 1) ports consisting of N ports of serial access ports SI(1) to SI(N) and SO(1) to SO(N) and one port of the random access port RP should be addressed. An address signal which is supplied from terminals 27(1) to 27(N + 1) is selected by a selector 28 and then supplied to the RAM 21. The random access port RP and the serial access ports SI(1) to SI(N) and SO(1) to SO(N) differ in the access method, namely, whether the access method is random or serial, rather than in the number of bits.

The RAM 21 reads data according to the address signal supplied from the selector 28 and sends it to the serial circuits 22(1) to 22(N). Thereafter, the data is output from the serial access ports SO(1) to SO(N). When the serial access ports SI(1) to SI(N) and SO(1) to SO(N) are commonly connected, they become I/O ports.

In the RAM 21, the serial access address is interrupted in a random access cycle. While the serial circuits 22(1) to 22(N) are accessed, the addresses of the serial access ports SI(1) to SI(N) and SO(1) to SO(N) are not necessary. Thus, the address contention between the random access port RP and the serial access ports SI(1) to SI(N) and SO(1) to SO(N) can be ignored.

In the structure shown in Fig. 6, since only serial access ports SI(1) to SI(N) and SO(1) to SO(N) are used, a probability where addressing cycle is delayed for N cycles takes place. However, when the data amount processed in the serial access ports SI(1) to SI(N) and SO(1) to SO(N) at a time is compared with the cycle number N, if the data amount is larger than the cycle number N, the process of the processor is not delayed. In the serial access ports SI(1) to SI(N) and SO(1) to SO(N), there is a probability where they are awaited for N cycles at worst. Thus, it is necessary to provide the serial access ports SI(1) to SI(N) and SO(1) to SO(N) with a function for waiting for N cycles.

Although the serial access port SI(1) to SI(N) and SO(1) to SO(N) can only access serial data at high speed, when the signal to be processed is an image signal in order of raster scan, the restriction is not caused. On the other hand, although a 2-dimensional block may deal with image data, since it is horizontally scanned, in the width of the 2-dimensional block, the signal can be serially accessed.
On the other hand, when the serial circuit 22(1) to 22(N) are increased, the area of the IC is also increased. For example, when one port is increased, approx. 10 % of memory capacity is increased. Although such a memory capacity cannot be ignored, from the view of the aforementioned benefit, the increase of the memory capacity can be satisfactorily traded off. Although the multiple port memory 35 causes the number of external connections to be increased, when it is disposed in an IC, no remarkably problem takes place.

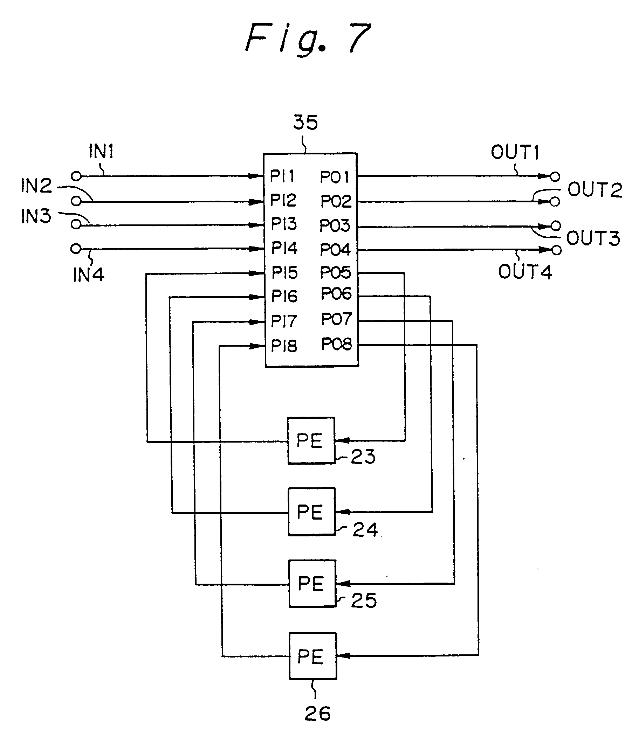

Fig. 7 shows an image signal processing circuit using the multiple port memory 35, which is composed of the RAM 21 and the serial circuits 22(1) to 22(N), which were shown in Fig. 6. In the figure, the reference symbols IN1 to IN4 are external inputs; OUT1 to OUT4 are external outputs; 23 to 26 are PE's; PI1 to PI8 are input ports; and PO1 to PO8 are output ports.

The multiple port memory 35 is provided with 16 serial circuits 22, for example. However, in the structure shown in Fig. 7, any serial circuit 22 uses either the serial access port SI or SO.

In the multiple port memory 35, N sets of I/O ports as serial access ports SI and SO controlled at the same address are formed. If only input ports or output ports are required, either serial access ports SI or SO are not used. The sets of the serial access ports SI and SO can be used as I/O terminals in common or as discrete input terminals or output terminals. By controlling the write address ADW and the read address ADR of the multiple port memory 35, the functions (1) to (4) described in the first embodiment can be accomplished.

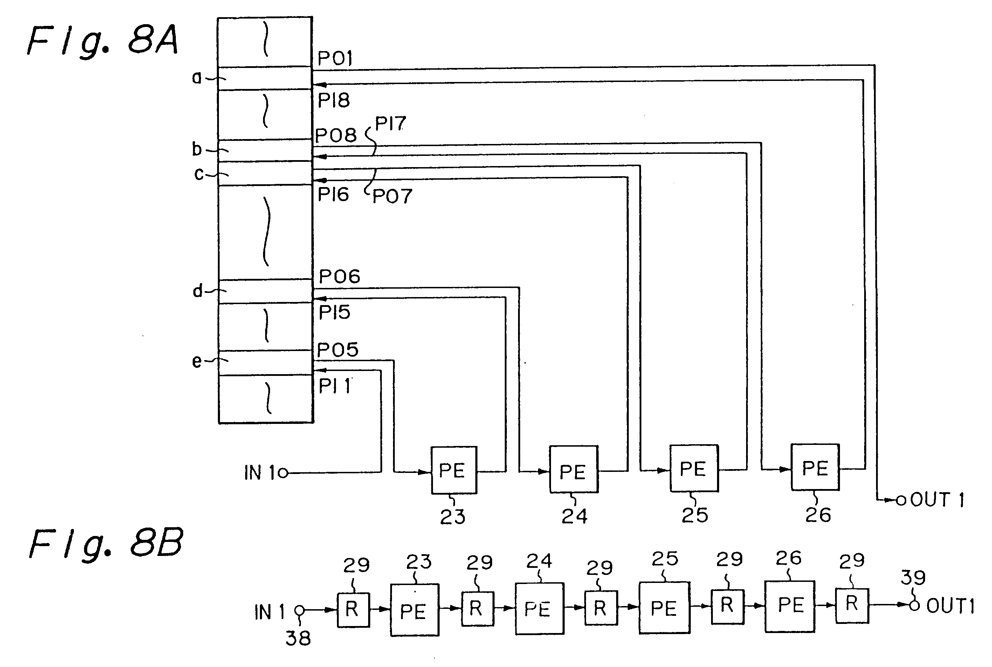

Fig. 8 shows a direct connection of PE23 to PE26 through the register in accordance with the function (1) of the first embodiment.

Unique addresses (a) to (e) are selected in the address area AR1 of the multiple port memory 35 shown in Fig. 8A. Thereafter, the input port PI1 and the output port P05 are fixed to the address (e). Likewise, the input port PI5 and the output port P06 are fixed to the address (d); the input port PI6 and the output port PO7 are fixed to the address (c); the input port PI7 and the output port PO8 are fixed to the address (b); and the input port PI8 and the output port PO1 are fixed to the address (a).

In the aforementioned structure, as shown in Fig. 8B, PE23 to 26 are serially connected through one stage of register 29 which is formed in each of the address (a) to (e). Thus, the function (1) can be accomplished. In Fig. 8B, the reference numerals 38 and 39 are terminals.

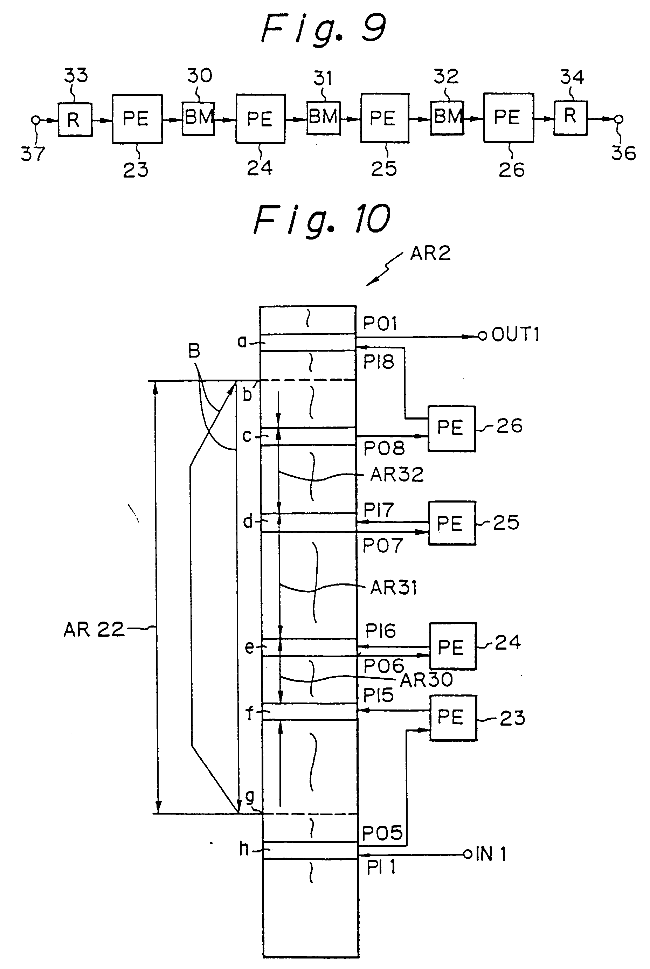

The structure shown in Fig. 8 is a simple serial connection. However, there may be a necessity for disposing a delay circuit, buffer memory, and so forth between PE23 to PE26 or between the I/O ports. In this case, as described in the functions (2) and (3) of the first embodiment, it is necessary to set address areas in accordance with the delay circuit, buffer memory, and so forth between PE23 and PE26 and to cycle the address areas. Such a structure is useful for disposing buffer memories 30 to 32 between PE23 to PE26 as shown in Fig. 9. In Fig. 9, the reference numerals 33 and 34 are registers and the reference numerals 36 and 37 are terminals.

Generally, when buffer memories are disposed in many portions, it is necessary to determine the memory size for each buffer memory at the worst case. However, in the following structure, it is not necessary to consider the memory size.

As shown in Fig. 10, in the address area AR2 for the multiple port memory 35, as the address areas for the buffer memories 30 to 32, the address (b) to address (g) are set. Between the address (b) and the address (g), the address (f) for the input port PI5, the address (e) for the input port PI6 and the output port P06, the address (d) for the input port PI7 and the output port P07, and the address (c) for the output port PO8 are set.

The address area AR22 from the address (b) to the address (g) is cycled as shown by the arrow mark B of Fig. 10. In the cycle state, the addresses (c), (d), (e), and (f) are incrementally moved. However, the cycle operation should be controlled so that the address areas AR30, AR31, and AR32 of the respective buffer memories 30 to 32 should not be "0" as expressed by the following equations.$\text{AR30 = f - e}$$\text{AR31 = e - d}$$\text{AR32 = d - c}$ Such a control operation can be accomplished by monitoring the outrun among the addresses.

Since the address areas AR30 to AR32 can be freely selected, the memory size of the multiple port memory 35 can become smaller than the sum of each memory size of the conventional buffer memories. In particular, when an image signal is pipeline-processed, the flow of signal in the pipe becomes constant in average. When the flow of a part of the buffer memories connected in series is larger than others, the flow of the others becomes small. Thus, a good result can be expected. In Fig. 10, the reference symbol (a) is a register 33, which is the address of the input port PI8 and the output port PO1; and the reference symbol (h) is a register 34, which is the address of the input port PI1 and the output port P05.

The buffering operation shown in Fig. 10 is a countermeasure against the possibility where the addressing of the multiple port memory 35 as mentioned above is awaited for the number of cycles according to the number of the ports. The addresses (d) and (e) shown in Fig. 10 are same as those of the input ports and the output ports PI6, PO6, PI7, and PO7. In this structure, as a precondition, the read operation is followed by the write operation. To remove such a precondition, it is necessary to separate the address (d) from the address (e) for one or more address.

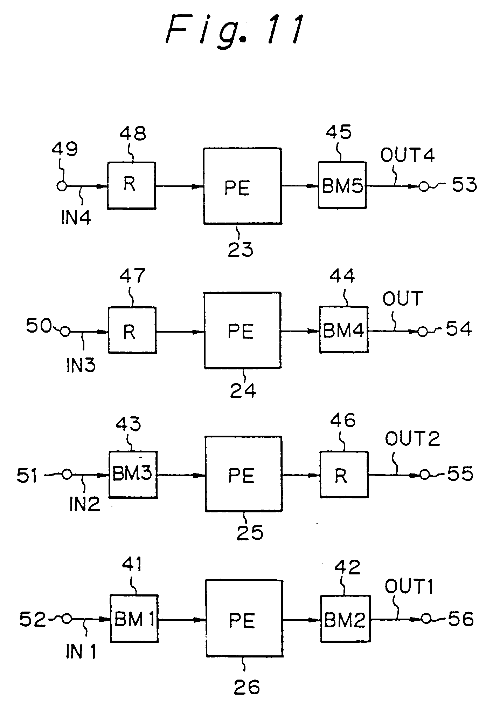

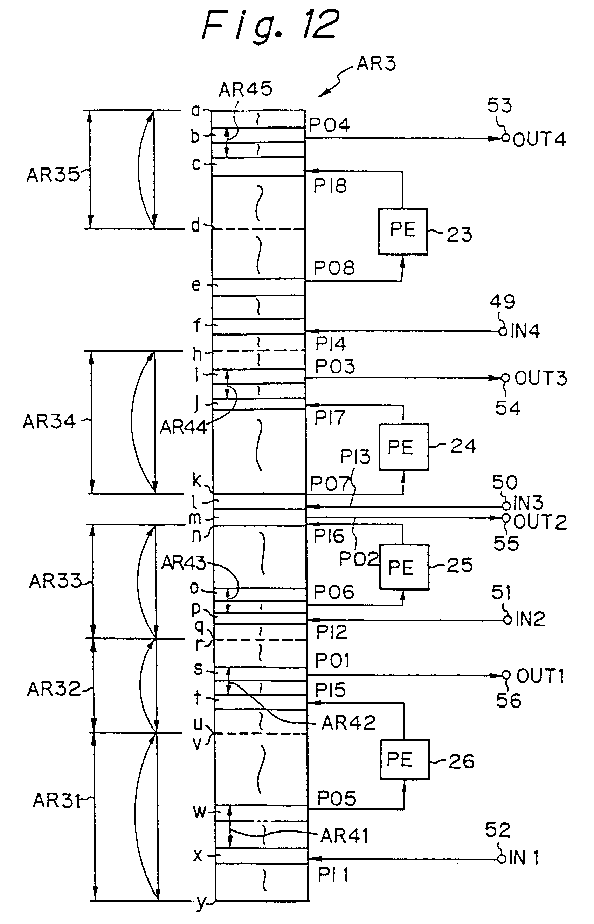

Fig. 11 shows the structure of a parallel connection of PE23 to PE26. Fig. 12 shows the structure of Fig. 11 in the address area AR3 of the multiple port memory 35. As shown in Fig. 11, all buffer memories 41 to 45 are discretely used. In the figure, the reference numerals 46 to 48 represent registers and the reference numerals 49 to 56 represents terminals.

As shown in Fig. 12, in the address area AR3, an address area AR31 consisting of addresses (v) to (y) is set to the buffer memory 41; an address area AR32 consisting of addresses (r) to (u) are set to the the buffer memory 42; an address area AR33 consisting of addresses (n) to (q) is set to the buffer memory 43; an address area AR34 consisting of addresses (h) to (k) is set to the buffer memory 44; and an address area R35 consisting of addresses (a) to (d) is set to the buffer memory 45. In Fig. 12, the reference symbols (x) and (w) represent addresses which are set for an address area AR41 of the buffer memory 41 and which are moved in succession. Likewise, the reference symbols (t) and (s) are addresses which are set for an address area AR42 of the buffer memory 42 and which are moved in succession; the reference symbols (p) and (q) represent addresses which are set for an address area AR43 of the buffer memory 43 and which are moved in succession; the reference symbols (j) and (i) represent addresses which are set for an address area AR44 of the buffer memory 44 and which are moved in succession; and the reference symbols (b) and (c) represent addresses which are set for an address area AR45 of the buffer memory 45 and which are moved in succession. On the other hand, the address (m) represents the register 46; the address (l) represents the register 47; and the addresses (e) and (f) represent the register 48.

The addresses (x), (w), (t), (s), (p), (q), (j), (i), (b), and (c) are controlled so that the address difference expressed by (x - w), (t - s), (p - q), (m - l), (j - i), (f - e), and (c - b) does not become 0, in order words, so that no outrun take place.

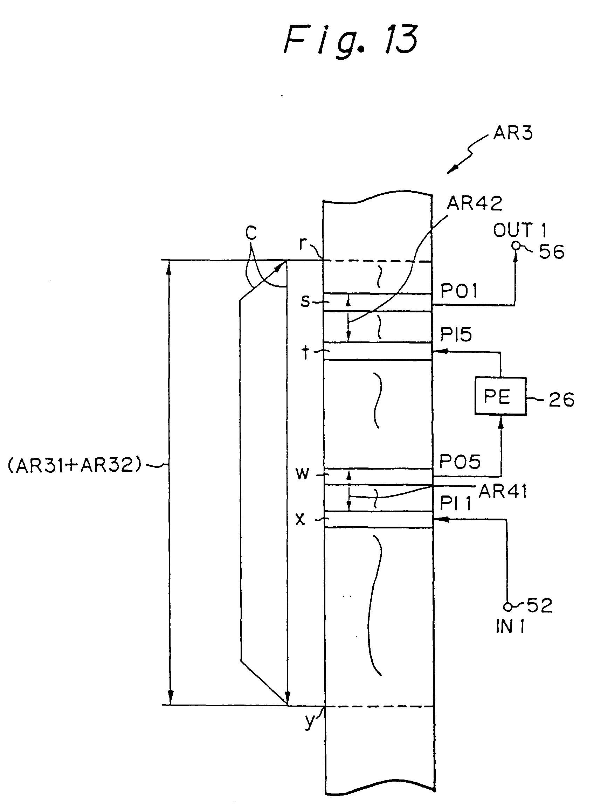

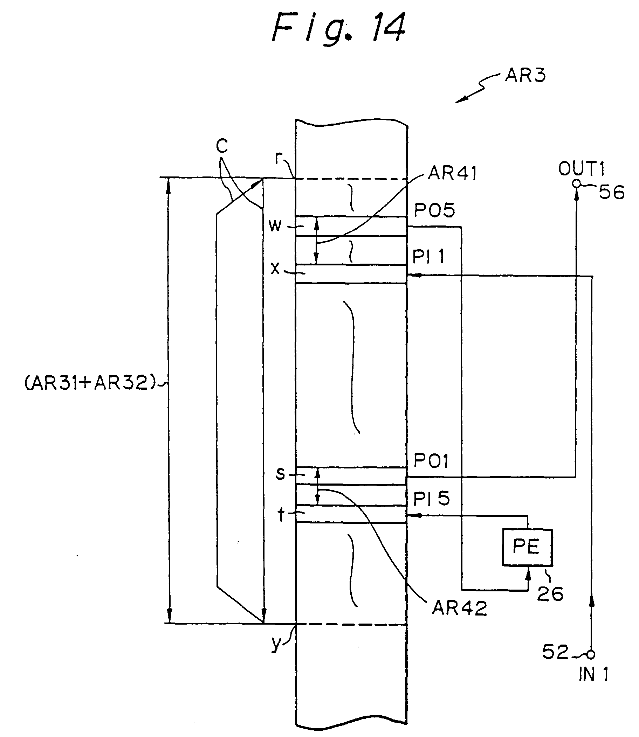

The address area AR3 shown in Fig. 13 represents the state just after the system is started up. Since the addresses (x), (w), (t), and (s) of the I/O ports PI1 and P05 and PI5 and PO1 are cycled in the address areas [AR31 + AR32] as shown by the arrow mark C. Thus, each of the addresses (x), (w), (t), and (s) which are cycled from the lowermost address (r) to the uppermost address (y) in the ascending order comes to the uppermost address (y), it returns to the lowermost address (r). Thus, the addresses (x), (w), (t), and (s) of the I/O port PI1 and P05 and the I/O port PI5 and PO1 in the address areas [AR31 + AR32] are disposed as shown in Fig. 14.

For example, the addresses (x) and (w) of the respective input port PI1 and the output port PO5 are incrementally moved from the lowermost address, for example the address (r), to the uppermost address, for example the address (y). On the other hand, the address (t) of the input port PI5 and the address (s) of the output port PO1 are incrementally moved from the lowermost address (r) to the uppermost address (y). When the address comes to the uppermost address (y), it returns to the lowermost address (r). Thus, as shown in Fig. 14, the addresses (x) and (w) are moved to the lowermost address (r), while the addresses (t) and (s) are moved to the uppermost address (y).

The address control of the multiple port memory 35 shown in Fig. 6 can be accomplished for each I/O port by means of an address generator.

The operation of the address generator is controlled in accordance with the following rules.
(1) Basically increments the address by 1.
(2) Increments the address at intervals of particular steps which is useful at digital signal process.
(3) Rolls over the address from the uppermost address to the lowermost address to prevent it from deviating out of a designated range.
(4) When the designated range is overlapped with another designated range by another address generator, the later should not outrun the former.
(5) When the system is reset or started up, moves the address from the lowermost address.

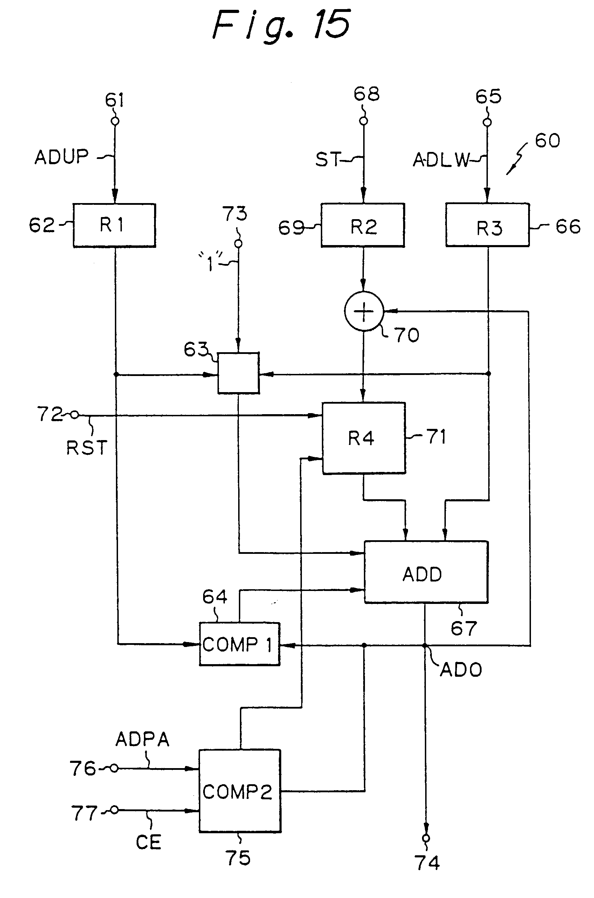

By referring to Fig. 15, an example of the structure of the address generator 60 will be described in the following.

The uppermost address ADUP supplied from a terminal 61 is supplied to a composite circuit 63 and a comparator 64 through a latch 62. The lowermost address ADLW supplied from a terminal 65 is supplied to a composite circuit 63 and an adder 67 through a latch 66. A step ST (for example, ST = 1) supplied from a terminal 68 is supplied to an adder 70 through a latch 69. An address value AD0 is fed back from the adder 67 to the adder 70. The adder 70 adds the present address value AD0 to the step ST. The resultant value is latched by the latch 71.

The latch 71 structures an accumulator along with the adder 70. When the system is started up, since an initial reset signal RST is supplied to the latch 71 through a terminal 72, the content of the latch 71 is cleared. The output from the latch 71 is supplied to the adder 67.

In the composite circuit 63, the lowermost ADLW and the uppermost ADUP supplied from the latches 62 and 66 are added. In addition, in the composite circuit 63, "1" is added through the terminal 73. Thereby, the value [uppermost address ADUP - lowermost address ADLW + 1] is obtained and the resultant value is supplied to the adder 67.

The adder 67 is a modulo adder for obtaining the address value AD0 with a modulo of [uppermost address ADUP - lowermost address ADLW + 1]. The adder 67 outputs the address value AD0 obtained by means of the modulo addition from a terminal 74. As was described above, when the system is started up, since the content of the latch 71 is cleared, the lowermost address ADLW is output as the address value AD0. The address value 64 which is output from the adder 67 is supplied to the comparators 64 and 75.

The comparator 64 compares the uppermost address ADUP with the address value AD0 so as to determines whether or not the address value AD0 exceeds the uppermost address ADUP. The connection of the comparator 64 and the adder 67 becomes an instruction for executing the modulo operation.

The comparator 75 compares an address ADPA of another I/O port supplied from a terminal 76 with the address value AD0 so as to determine whether or not an outrun takes place. If it is determined that an outrun will take place, the comparator 75 outputs a control signal to the latch 71 so that the content of the latch 71 is held and thereby the accumulator is stopped. When the number of I/O ports is N, the comparator 75 should compare (N - 1) sets. However, in the same address area, since the comparator can deal with the address of only the preceding I/O port, it is possible for the comparator to compare one set.

A signal CE supplied from a terminal 77 is a control signal for stopping the operation of the comparator 75 when there is no I/O port designated in the same address area.

According to the embodiments of the present invention, since the multiple port memory 1 or 35 can be commonly used, it is not necessary to provide each PE with a memory. In this case, since the memory can be commonly used, redundancy of data can be prevented. In addition, since the memory size can be varied between PE2 to PE5 23 to 26, it is possible to set the memory size of the multiple port memory 1 or 35 to a value which is smaller than the sum of each memory size of the conventional PE's.

In addition, the connection state of the PE2 to PE5 23 to 26 can be varied and thereby high flexibility and generality can be accomplished. In addition, while the memory is not wasted, the redundancy of the circuit can be decreased. Thus, an architecture with high generality and low redundancy can be accomplished.

Although the aforementioned embodiment was described with respect to two cases of serial connection and parallel connection of the PE2 to PE5 23 to 26. However, it is possible to combine the serial connection and the parallel connection. In addition, in the description of the aforementioned embodiment, although the number of inputs of each of PE2 to PE5 23 to 26 was 1, it is possible to increase the number of inputs thereof where required.

In the above mentioned embodiments, although the multiple port memory 1 or 35 was used only for data and the operation and effect with respect to data were described, it is not limited to use a program memory, a table memory, or the like.

It will be readily apparent to those skilled in the art that various modifications may be made and other embodiments implemented without departing from the scope of the inventive concept.

According to the image signal processing circuit of the present invention, the memory with which each processor element is conventionally provided can be substituted with the multiple port memory. Thus, since the memory can be commonly used, it is possible to prevent data from being redundantly stored.

In addition, since the memory size can be varied between the processor elements, the memory size of the multiple port memory becomes much smaller than the sum of the memory size of each processor element.

The structure of the processor elements can be varied. The flexibility and generality of the specification can be improved. While the memory areas are not wasted, the redundancy of the circuit can be reduced. Thus, an architecture with high generality and low redundancy can be accomplished.

In addition, according to the above indicated embodiment, by disposing a plurality of serial circuits and a plurality of serial access ports in RAM, it is possible to prevent the structure of the multiple port memory from being complicated and enlarged. Thus, the feasibility of the present invention can be further improved.

## Claims

1. An image signal processing circuit comprising a plurality of processor elements (PE 2-5) connected to respective ports (PO 5-18) of a multiple port memory (1) configurable to the processor elements (PE 2-5), characterised in that:
all addresses of the memory are accessible for reading and writing to each processor element;
and by setting means (28) for setting the write address and/or read address of the processor elements (PE 2-5) to given address areas of the multiple port memory.

2. An image signal processing circuit according to claim 1 wherein said setting means (28) is adapted for setting the write address of a port (PO 5-18) said multiple port memory (1) to be the same as the read address of another port (PO 5-18) thereof, whereby connections between said processor elements (PE 2-5) can be established by the setting means (28).

3. An image signal processing circuit according to claim 1 wherein the setting means (28) is adapted for setting a first address and a second address in said multiple port memory (1) so that said first address is apart from said second address by a space,
and for setting the write address and/or the read address for each of said processor elements (PE 2-5) in an address area defined by said first address and said second address, and
for cycling said write address and/or said read address between said first address and said second address while the space between said write address and/or said read address is fixed to a given value.

4. An image signal processing circuit according to claim 1 wherein the setting means (28) is adapted for setting a first address and a second address in said multiple port memory (1) so that said first address is apart from said second address by a space,
and for setting the write address and/or the read address for each of said processor elements (PE 2-5) in an address area defined by said first address and said second address, and
for cycling said write address and/or said read address between said first address and said second address while the space between said write address and/or said read address is varied and one of said read address and/or said write address does not outrun the other thereof.

5. An image signal processing circuit according to claim 1 wherein said setting means (28) is adapted for setting a first address and a second address in said multiple port memory so that said first address is apart from said second address by a space, and
whereby data of the address area defined by said first address and said second address is repeatedly readable.

6. An image signal processing circuit according to any one of the preceding claims wherein the multiple port memory comprises a random access memory (21) and one or more serial access ports (22 (I) - (N)) .

7. An image signal processing circuit according to claim 6 wherein the serial access ports (22(I)-(N)) are commonly connected as I/O ports.

## Patentansprüche

1. Bildsignal-Verarbeitungsschaltung mit mehreren Prozessor-Elementen (PE2-5), die mit entsprechenden Anschlüssen (Ports) (PO5-18) eines Vielfachanschluß-Speichers (1) verbunden sind, der für die Prozessor-Elemente (PE2-5) konfigurierbar ist,
**dadurch gekennzeichnet,** daß:
alle Adressen des Speichers zum Lesen und Schreiben zu jedem Prozessor-Element zugreifbar sind;
und daß eine Einstelleinrichtung (28) zum Einstellen der Schreibadresse und/oder Leseadresse der Prozessor-Elemente (PE2-5) auf gewisse Adreßbereiche des Vielfachanschluß-Speichers vorgesehen ist.

2. Bildsignal-Verarbeitungsschaltung nach Anspruch 1,
bei der die Einstelleinrichtung (28) die Schreibadresse eines Anschlusses (PO5-18) des Vielfachanschluß-Speichers (1) auf die gleiche wie die Leseadresse eines anderen Anschlusses (P05-18) von diesem einstellen kann, wobei Verbindungen zwischen den Prozessor-Elementen (PE2-5) durch die Einstelleinrichtung (28) geschaffen werden können.

3. Bildsignal-Verarbeitungsschaltung nach Anspruch 1,
bei der die Einstelleinrichtung (28) eine erste Adresse und eine zweite Adresse in dem Vielfachanschluß-Speicher (1) einstellen kann, so daß sich die erste Adresse durch einen bestimmten Abstand von der zweiten Adresse unterscheidet,
und die Schreibadresse und/oder Leseadresse für jedes der Prozessor-Elemente (PE2-5) auf einen Adreßbereich einstellen kann, der durch die erste Adresse und durch die zweite Adresse festgelegt ist, und
die Schreibadresse und/oder der Leseadresse zwischen der ersten Adresse und der zweiten Adresse zyklisch vertauschen kann, während der Abstand zwischen der Schreibadresse und/oder der Leseadresse auf einem festen Wert gehalten wird.

4. Bildsignal-Verarbeitungsschaltung nach Anspruch 1,
bei der die Einstelleinrichtung (28) eine erste Adresse und eine zweite Adresse in dem Vielfachanschluß-Speicher (1) einstellen kann, so daß die erste Adresse in einem gewißen Abstand von der zweiten Adresse liegt,
die Schreibadresse und/oder der Leseadresse für jedes der Prozessor-Elemente (PE2-5) auf einen Adreßbereich einstellen kann, der durch die erste Adresse und durch die zweite Adresse festgelegt wird, und
die Schreibadresse und/oder der Leseadresse zwischen der ersten Adresse und der zweiten Adresse zyklisch vertauschen kann, während der Abstand zwischen der Schreibadresse und/oder der Leseadresse variiert wird und eine der Leseadresse und/oder der Schreibadresse nicht die jeweils andere überläuft.

5. Bildsignal-Verarbeitungsschaltung nach Anspruch 1,
bei der die Einstelleinrichtung (28) eine erste Adresse und eine zweite Adresse in dem Vielfachanschluß-Speicher einstellen kann, so daß die erste Adresse einen Abstand von der zweiten Adresse aufweist, und
Daten des Adreßbereiches, der durch die erste Adresse und durch die zweite Adresse festgelegt wird, wiederholt lesbar sind.

6. Bildsignal-Verarbeitungsschaltung nach einem der vorhergehenden Ansprüche,
wobei der Vielfachanschluß-Speicher einen frei zugreifbaren Speicher (21) und einen oder mehrere serielle Zugriffsanschlüsse (22(I)-(N)) aufweist.

7. Bildsignal-Verarbeitungsschaltung nach Anspruch 6,
bei dem die seriellen Zugriffsanschlüsse (22(I)-(N)) gemeinsam als I/O-Anschlüsse verbunden sind.

## Revendications

1. Circuit de traitement de signal d'image comprenant une pluralité d'éléments de processeur (PE 2-5) connectés à des ports respectifs (PO 5-18) d'une mémoire à multiples ports (1) qui peut être configurée pour les éléments de processeur (PE 2-5), caractérisé en ce que :
toutes les adresses de la mémoire sont accessibles pour la lecture et l'écriture pour chaque élément de processeur ;
et par un moyen d'établissement (28) pour établir l'adresse d'écriture et/ou l'adresse de lecture des éléments de processeur (PE 2-5) au niveau de zones d'adresses données de la mémoire à multiples ports.

2. Circuit de traitement de signal d'image selon la revendication 1, dans lequel ledit moyen d'établissement (28) est adapté pour établir l'adresse d'écriture d'un port (PO 5-18) de ladite mémoire à multiples ports (1) de telle sorte qu'elle soit la même que l'adresse de lecture d'un autre port (PO 5-18) de cette même mémoire et ainsi, des connexions entre lesdits éléments de processeur (PE 2-5) peuvent être établies par le moyen d'établissement (28).

3. Circuit de traitement de signal d'image selon la revendication 1, dans lequel ledit moyen d'établissement (28) est adapté pour établir une première adresse et une seconde adresse dans ladite mémoire à multiples ports (1) de telle sorte que ladite première adresse soit séparée de ladite seconde adresse par un espace ; et
pour établir l'adresse d'écriture et/ou l'adresse de lecture pour chacun desdits éléments de processeur (PE 2-5) dans une zone d'adresses définie par ladite première adresse et par ladite seconde adresse ; et
pour cycler ladite adresse d'écriture et/ou ladite adresse de lecture entre ladite première adresse et ladite seconde adresse tandis que l'espace entre ladite adresse d'écriture et/ou ladite adresse de lecture est fixé à une valeur donnée.

4. Circuit de traitement de signal d'image selon la revendication 1, dans lequel ledit moyen d'établissement (28) est adapté pour établir une première adresse et une seconde adresse dans ladite mémoire à multiples ports (1) de telle sorte que ladite première adresse soit espacée de ladite seconde adresse par un espace ; et
pour établir l'adresse d'écriture et/ou l'adresse de lecture pour chacun desdits éléments de processeur (PE 2-5) dans une zone d'adresses définie par ladite première adresse et par ladite seconde adresse ; et
pour cycler ladite adresse d'écriture et/ou ladite adresse de lecture entre ladite première adresse et ladite seconde adresse tandis que l'espace entre ladite adresse d'écriture et/ou ladite adresse de lecture est amené à varier et qu'une adresse pris parmi ladite adresse de lecture et/ou ladite adresse d'écriture ne dépasse pas l'autre.

5. Circuit de traitement de signal d'image selon la revendication 1, dans lequel ledit moyen d'établissement (28) est adapté pour établir une première adresse et une seconde adresse dans ladite mémoire à multiples ports de telle sorte que ladite première adresse soit espacée de ladite seconde adresse par un espace ; et
ainsi, des données de la zone d'adresses définie par ladite première adresse et par ladite seconde adresse peuvent être lues de manière répétée.

6. Circuit de traitement de signal d'image selon l'une quelconque des revendications précédentes, dans lequel la mémoire à multiples ports comprend une mémoire vive (21) et un ou plusieurs ports d'accès série (22(1)-(N)).

7. Circuit de traitement de signal d'image selon la revendication 6, dans lequel les ports d'accès série (22(I)-(N)) sont connectés en commun en tant que ports I/O.
